# EUROPÄISCHE PATENTSCHRIFT

(11) **EP 1 444 882 B1**
(45) Veröffentlichungstag und Bekanntmachung des Hinweises auf die Patenterteilung: **30.12.2015**
(21) Anmeldenummer: 04000678.5
(22) Anmeldetag: 15.01.2004
(51) Int. Cl.: A01F 15/08

(54) **Rundballenpresse für landwirtschaftliche Halmgüter**
Rotobaler for agricultural products
Presse à balles rondes pour des produits agricoles

(30) Priorität: 28.01.2003 DE 10303201
(43) Veröffentlichungstag der Anmeldung: 11.08.2004
(73) Patentinhaber: Lely Vermeer Maschinenfabrik GmbH, 38304 Wolfenbüttel (DE)
(72) Erfinder: Arnold, Martin, 38275 Steinlah (DE)
(74) Vertreter: Jennen, Peter Leonardus Hendricus

(56) Entgegenhaltungen:
- EP-A- 0 296 709
- EP-A- 1 266 563
- DE-C1- 4 012 738
- US-A- 4 389 930
- US-A- 4 624 179
- US-A- 4 889 047

## Beschreibung

Die Erfindung betrifft eine Rundballenpresse für landwirtschaftliche Halmgüter mit einer beweglichen Ballenauslassvorrichtung, wobei die Bewegungsgeschwindigkeit der Öffnungs- und Schließbewegung der Ballenauslassvorrichtung in Abhängigkeit von deren Position gesteuert wird.

Bei landwirtschaftlichen Rundballenpressen wird die Ballenauslassvorrichtung zum Entladen eines fertigen Rundballens bei unterbrochener Gutzufuhr in eine Entladestellung hochgeklappt und nach Auswurf des Ballens wieder geschlossen. Diese Rundballenpresse ist insofern nachteilig, weil durch das Anhalten zum Auswerfen des Erntegutballens Zeit verstreicht, in der die Rundballenpresse und deren Bedienungsperson nicht weiterarbeiten können. Die heutigen Schlepper stellen zwar hohe Volumenströme und Drücke zum schnellen Bewegen des Hintergehäuses zur Verfügung. Schnelle Öffnungs- und Schließgeschwindigkeiten verursachen jedoch beim Fahren der Ballenauslassvorrichtung in ihre Endlagen hohe Erschütterungen und Stoßbelastungen der Rundballenpresse, so dass die verfügbaren Hydraulikleistungen nicht genutzt werden können und durch Einbau von ungesteuerten Drosselventilen begrenzt werden.

Bei einer aus der DE 40 12 738 C1 bekannten Rundballenpresse soll ein sprunghaftes Öffnen der Ballenauslassvorrichtung vermieden und ein kontinuierliches Öffnen erreicht werden. Hierzu wird vorgeschlagen, das Druckmittel des Hubzylinders der Ballenauslassvorrichtung während der Öffnungsbewegung über ein Drosselelement und während der Schließbewegung ungedrosselt über eine Kurzschlussleitung strömen zu lassen. Nachteilig ist, dass sich hierdurch weder die Bauteilbelastungen in den Endlagen reduzieren noch die Öffnungs- bzw. Schließzeiten minimieren lassen.

Ferner offenbart die EP 1 266 563 A1 eine Rundballenpresse mit einem neigungsveränderlichen Wickeltisch.

Der Erfindung liegt die Aufgabe zugrunde, einerseits die Stillstandszeiten der Rundballenpresse während des Ballenauswurfes zu verkürzen und andererseits große Bauteilbelastungen zu vermeiden.

Diese Aufgabe wird erfindungsgemäß dadurch gelöst, dass die Bewegungsgeschwindigkeit sensor- und/oder programmgesteuert wird, wobei die Öffnungs- und Schließbewegung der Ballenauslassvorrichtung wenigstens vor dem Erreichen einer Endstellung langsamer erfolgt als im übrigen Bewegungsbereich. Auf diese Weise kann die Ballenauslassvorrichtung zwischen ihren Endlagen mit maximaler Geschwindigkeit bewegt werden, während diese mit reduzierter Geschwindigkeit bauteilschonend in ihre Endlagen gefahren wird. Belastungsspitzen werden vermieden und die Prozesszeiten für den Ballenausstoß werden deutlich verringert. Dieses gilt insbesondere für die vollautomatische Betätigung des Hintergehäuses, die dann nicht nur komforterhöhend, sondern zeitsparend und bauteilschonend, d.h. betriebssicherer arbeitet, wobei sich auch kostenmäßig Synergien durch die Verwendung einer ohnehin für den Automatikbetrieb erforderlichen Sensorik und aufwendigeren Hydraulik ergeben können.

Trotz Verwendung von kostengünstigen Standard-Hydraulikzylindern können die Geschwindigkeiten der Ballenauslassvorrichtung individuell eingestellt. Mit einer Standardbaugruppe können unterschiedliche Pressentypen und -größen bestückt werden. Unabhängig von verschiedenen Volumenströmen ist gewährleistet, dass die Ballenauslassvorrichtung in jeder Position die vom Sensor und/oder vom Programm vorgegebene Bewegungsgeschwindigkeit hat.

Weitere Merkmale der Erfindung ergeben sich aus den übrigen Unteransprüchen und der nachfolgenden Beschreibung dreier Ausführungsbeispiele. Hierbei zeigt:
- Fig. 1 bis 3: eine schematische Seitenansicht einer Rundballenpresse mit einer erfindungsgemäßen Steuerung der Bewegungsgeschwindigkeit der Ballenauslassvorrichtung in drei verschiedenen Positionen,
- Fig. 4: eine vergrößerte Darstellung der Steuervorrichtung in der in Fig. 2 gezeichneten Stellung der Ballenauslassvorrichtung und
- Fig. 5 und 6: jeweils ein anderes Ausführungsbeispiel der Erfindung in schematischer Seitenansicht der Rundballenpresse.

Die Rundballenpresse hat ein allgemein mit 1 beziffertes Fahrgestell mit Rädern 2, welches über eine Zugdeichsel 3 an einen nicht dargestellten Schlepper anzuhängen ist. Den Rädern 2 ist in durch Pfeil 4 gekennzeichnete Fahrtrichtung der Rundballenpresse eine nicht dargestellte Aufnahmevorrichtung (Pickup) üblicher Bauart vorgeordnet.

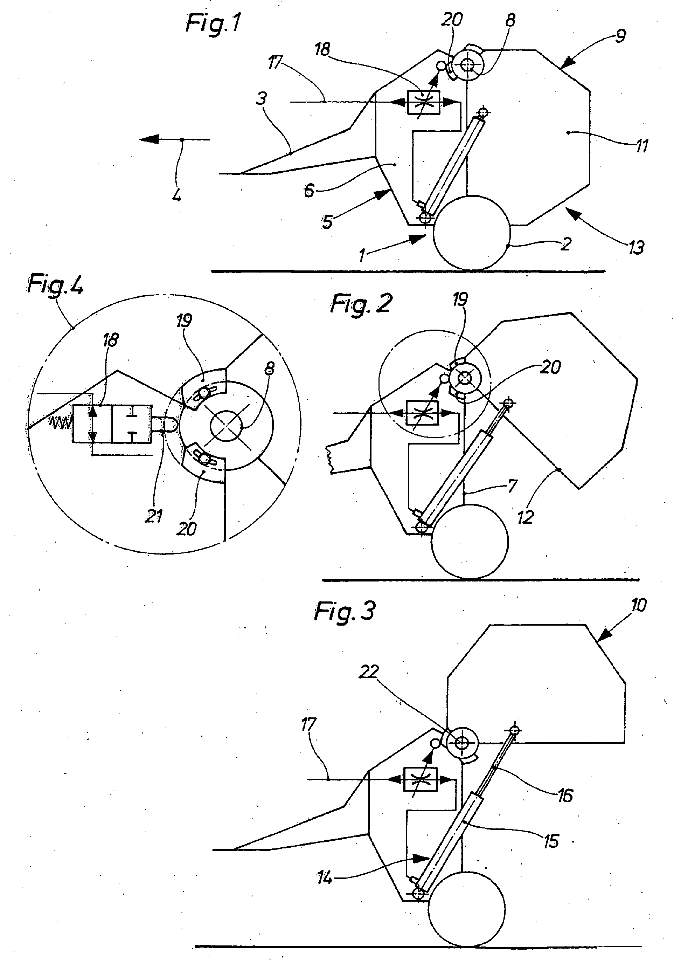

Auf dem Fahrgestell 1 ist das Vordergehäuse 5 eines zylindrischen Pressraumgehäuses angebracht. Es besteht aus zwei vorderen Seitenwänden 6, die durch Querverbindungen miteinander verbunden sind und am oberen Abschluss ihrer hinteren Kante 7 Schwenklager 8 aufweisen, in welchen ein Hintergehäuse 9 als Ballenauslassvorrichtung um etwa 90° in eine Entladestellung 10, siehe Fig.3, für den Rundballen aufschwenkbar gelagert ist. Dieses besteht aus zwei hinteren Seitenwänden 11, deren Vorderkante 12 in geschlossener Gehäusestellung 13, siehe Fig. 1, an der hinteren Kante 7 des Vordergehäuses 5 anliegt. Vorder 5- und Hintergehäuse 9 sind in dieser geschlossenen, ersten Endstellung 13 des Hintergehäuses 9 durch beidseitig des Pressraumgehäuses angeordnete, nicht dargestellte mechanische Verriegelungen formschlüssig miteinander verbunden. Aufbau und Wirkungsweise einer mechanischen Verriegelung sind beispielsweise in der DE 3118663 C2 dargestellt und beschrieben. Anstelle eines schwenkbaren Hintergehäuses 9 kann als Ballenauslassvorrichtung auch ein zweiteiliges Gehäuseteil oder auch ein verschiebbares Gehäuseteil vorgesehen sein.

Zum Öffnen des Hintergehäuses 9 aus der in Fig. 1 dargestellten geschlossenen ersten Endstellung 13 in die in Fig. 3 gezeigte zweite Endstellung 10 dient an jeder Gehäuseseite ein einfachwirkender Hydrozylinder 14, dessen Zylindergehäuse 15 an einem vorderen Lagerbolzen der vorderen Seitenwand 6 und dessen Kolbenstange 16 an einem Bolzen der hinteren Seitenwand 11 gelagert ist. Die Hydrozylinder 14 werden über ein Schleppersteuerventil einer nicht gezeigten Schlepperhydraulikanlage beaufschlagt und begrenzen als Anschlag das Aufschwenken des Hintergehäuses nach oben in seine zweite Endstellung.

Um hohe Stoßbelastungen beim Fahren des Hintergehäuses 9 in die Endstellungen 10, 13 zu vermeiden, ist erfindungsgemäß in der Zuleitung 17 der Hydrozylinder 14 ein als verstellbares Drosselventil wirkendes Steuerventil 18 angeordnet, das während der Verschwenkbewegung durch fest am Hintergehäuse 9 angebrachte Steuersegmente 19, 20 jeweils so verstellt wird, dass das Hintergehäuse 9 gebremst und damit bauteilschonend in die Endstellungen 10, 13 fährt. Wie am besten aus Figur 4 ersichtlich, ist das Ventil 18 in zwei Schaltstellungen steuerbar. In der gezeichneten Nullstellung erfolgt sowohl die Druckbeaufschlagung der Hydrozylinder 14 zum Aufschwenken des Hintergehäuses 9 als auch der Rückfluss des Druckmittels beim Absenken des Hintergehäuses 9 ungedrosselt durch die Zuleitung 17, d.h. das Hintergehäuse 9 bewegt sich mit maximaler Geschwindigkeit. In der Arbeitsstellung, siehe Fig. 1 und 3, wird ein Steuerstift 21 des Ventils 18 durch ein Steuersegment 19, 20 in Richtung Sperrstellung des Ventils 18 verschoben, so dass der Durchfluss des Druckmittels zu bzw. von den Hydraulikzylindern 18 gedrosselt erfolgt und dadurch das Hintergehäuse 9 langsam in seine jeweilige Endstellung 10, 13 fährt. Ein erstes Steuersegment 20 ist der ersten Endstellung 13 des Hintergehäuses 9 und ein zweites Steuersegment 19 der zweiten Endstellung 10 zugeordnet. Die Steuersegmente 19, 20 können in Umfangsrichtung und/oder in radialer Richtung bezogen auf die Schwenkachse 22 des Hintergehäuses 9 verstellbar sein. Damit lässt sich einerseits die Position des Hintergehäuses 9 einstellen, ab der die Drosselung und damit das Abbremsen erfolgen soll, andererseits lässt sich durch radiale Verstellung die Eindrücktiefe des Steuerstiftes 21 und damit die Drosselhöhe einstellen.
Das Steuerventil ist in diesem Beispiel als 2/2 Proportionalwegeventil 18 ausgebildet, es kann aber auch ein ansteuerbares Stromregelventil oder ein anderes gleichwirkendes Drosselventil verwendet werden. Anstelle der Steuersegmente 19, 20 können alternativ auch Endschalter oder Steuernocken verwendet werden.

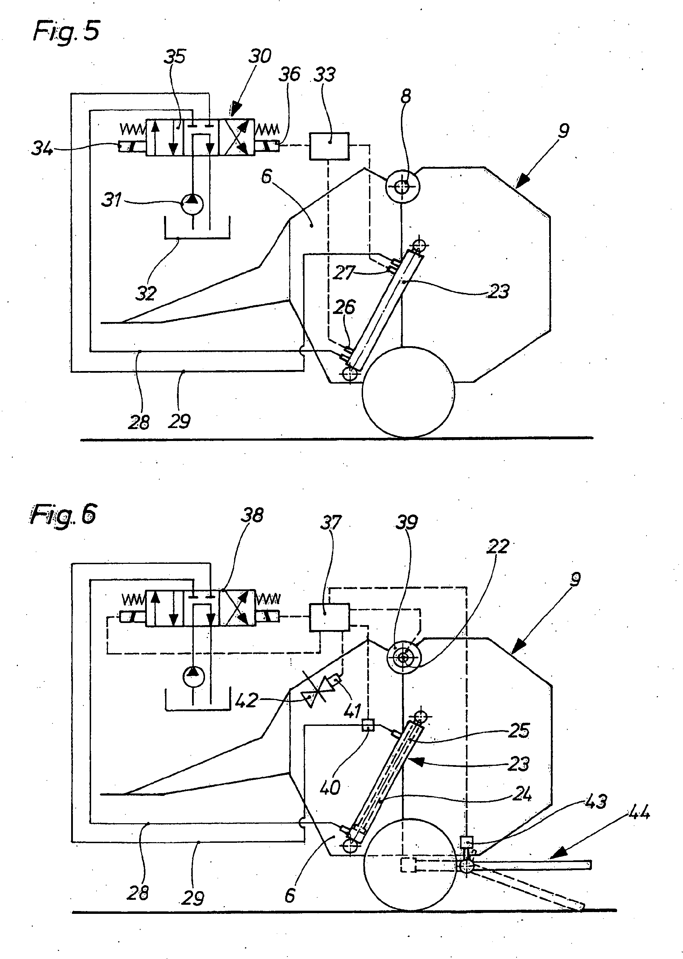

Bei den in Figur 5 und Figur 6 dargestellten Ausführungsbeispielen dient zum Öffnen des Hintergehäuses 9 und zu seiner Verriegelung mit dem Vordergehäuse 5 an jeder Gehäuseseite ein doppeltwirkender Hydrozylinder 23, dessen Zylindergehäuse 24 an der vorderen und dessen Kolbenstange 25 an der hinteren Seitenwand 11 angelenkt ist.

Der in Figur 5 gezeigte, doppeltwirkende Hydrozylinder 23 weist zwei Sensoren 26, 27 auf, die die Kolbenposition des Hydrozylinders 23 erfassen und damit indirekt die Stellungen des Hintergehäuses 9 signalisieren, in denen eine Veränderung der Bewegungsgeschwindigkeit des Hintergehäuses 9 bewirkt werden soll. Der Hydrozylinder 23 ist über zwei Zuleitungen 28, 29 mit einem elektromagnetisch betätigbaren 3/3 Proportionalwegeventil 30 verbunden. Das 3/3 Wegeventil 30 hat eine mittlere gezeichnete Umlauf-Nullstellung, in der eine Hydropumpe 31 Druckmittel aus einem Vorratsbehälter 32 entnimmt und durch eine Vorlauf- sowie eine Rücklaufleitung drucklos umfördert. Das 3/3 Wegeventil 30 ist Bestandteil einer elektronischen Regel- oder Steuereinrichtung, die allgemein mit Ziffer 33 gekennzeichnet ist. Die elektronische Regel- oder Steuervorrichtung 33 ist über Steuerleitungen mit den Sensoren 26, 27 verbunden. Durch Betätigen des linken Elektromagnetventils 34 wandert der Steuerkolben 35 nach rechts, so dass die Pumpe 31 Druckmittel in die kolbenseitige Zuleitung 28 fördert, das Hintergehäuse 9 angehoben wird und Druckmittel aus der kolbenstangenseitigen Zuleitung 29 in den

Vorratsbehälter 32 zurückfließt. Sobald der Kolben des Hydrozylinders 23 in den Schaltbereich des Sensors 27 kommt, der gemessen am Schwenkweg des Hintergehäuses 9 jeweils 1 bis 2° vor der Endstellung 10 des Hintergehäuses 9 liegt, bewirkt die Regel- oder Steuervorrichtung 33 eine Bewegung des Steuerkolbens 35 in die mittlere Sperrstellung, so dass der Durchfluss in der Zuleitung 28 gedrosselt wird und das Hintergehäuse 9 mit verringerter Geschwindigkeit in seine Endstellung 10 fährt. Durch Betätigen des rechten Elektromagnetventils 3 wandert der Steuerkolben nach links, so dass Druckmittel zunächst ungedrosselt durch die kolbenseitige Zuleitung 28 in den Vorratsbehälter 32 zurückfließt und sich das Hintergehäuse 9 absenkt. Sobald Sensor 26 schaltet, bewirkt die Regel- oder Steuervorrichtung 33 eine Bewegung des Steuerkolbens 35 in die mittlere Sperrstellung, wodurch das Hintergehäuse 9 gedrosselt in seine Endstellung 13 fährt.

Bei dem in Figur 6 dargestellten, vollautomatischen Ablauf der Hintergehäusesteuerung sind folgende Sensoren vorgesehen, die über eine Regel- oder Steuereinrichtung 37 mit einem 3/3 Proportionalwegeventil 38 in Verbindung stehen:
- ein Drehpotentiometer 39 ist koaxial zur Schwenkachse 22 angeordnet und signalisiert die Position des Hintergehäuses 9 zum Vordergehäuse 5.
- ein Drucksensor 40 in der kolbenstangenseitigen Zuleitung 29 signalisiert den Druck des Druckmittels als Maß für die Verriegelungskraft, mit der das Vorder 5- und Hintergehäuse 9 zusammengehalten wird.
- ein Sensor 41 für die Trenneinrichtung 42 des Umhüllmaterials signalisiert die Beendigung des Umhüllvorganges und dient zur Auslösung der automatischen Öffnung des Hintergehäuses 9.
- ein Sensor 43 ist einer Ballenabrolleinrichtung 44 zugeordnet und signalisiert, dass der Rundballen aus dem Schwenkbereich des Hindergehäuses 9 ist und das Hintergehäuse 9 abzusenken ist.

Der doppeltwirkende Hydrozylinder 23 ist in diesem Beispiel ohne Sensorik ausgebildet.

Der Funktionsablauf ist wie folgt:
Der Drucksensor 40 löst bei Erreichen des voreingestellten Pressdrucksollwertes die Umhüllvorrichtung aus. Nach Ablauf der Umhüllung des Ballens trennt eine Trenneinrichtung 42 das Umhüllmaterial ab. Die Beendigung des Trennvorganges signalisiert ein Sensor 41 an die Regel- oder Steuereinrichtung 37 zum Öffnen des Hintergehäuses 9, d.h. das linke Magnetventil wird betätigt, worauf der Steuerkolben ganz nach rechts bewegt wird und das Hintergehäuse 9 mit voller Geschwindigkeit öffnet. Das Drehpotentiometer 39 erfasst die Positionen des Hintergehäuses 9 und gibt etwa 2° vor Erreichen der oberen Endstellung 10 ein Signal an die Steuer- oder Regelvorrichtung 37, die eine Bewegung des Steuerkolbens nach links bewirkt, so dass der Druckmittelstrom gedrosselt wird und das Hintergehäuse 9 langsam in die Endstellung 10 fährt. Erst wenn der Rundballen die Ballenabrollvorrichtung 44 verlassen hat und diese wieder in ihrer oberen Ruhestellung ist, gibt ein Sensor 44 ein Signal zum Schließen des

Hintergehäuses 9 an die Regel- oder Steuervorrichtung 37. Der Steuerkolben wird ganz nach links verschoben. Das Hintergehäuse 9 schließt zunächst mit maximaler Geschwindigkeit. Kurz vor Erreichen seiner geschlossenen Endstellung 13 gibt das Drehpotentiometer 39 ein Signal an die Regel- oder Steuervorrichtung 37, die das Verstellen des Steuerkolbens in die mittlere Sperrstellung und damit eine abgebremste Bewegung des Hintergehäuses 9 in seine Endstellung 13 bewirkt. Anstelle des Sensors 43 ist es zeitlich vorteilhafter, wenn der Schließbeginn des Hintergehäuses 9 durch ein elektronisches Zeitglied gesteuert wird, d.h., mit einer vorgebbaren Zeitverzögerung schließt das Hintergehäuse 9 automatisch nach Erreichen der oberen Endstellung 10. Das Zeitglied ist Bestandteil einer in die Regel- oder Steuervorrichtung integrierten zeitabhängigen Programmsteuerung der Bewegungsgeschwindigkeit der Ballenauslassvorrichtung. Trotz Verwendung von Standardbauteilen ermöglicht diese Lösung eine einfache, funktionssichere und vor allem individuelle Gestaltung der Ballenauswurffunktion verbunden mit einer Optimierung der Prozesszeit. Durch die Einstellbarkeit der Bewegungsgeschwindigkeit des Hintergehäuses ist eine Anpassung an unterschiedliche Schlepperhydraulikleistungen möglich. Darüber hinaus ist es von großem Vorteil, dass eine Standardbaugruppe für unterschiedliche Pressentypen und - größen verwendet werden kann, wodurch große Stückzahlen erreichbar sind.

## Patentansprüche

1. Rundballenpresse für landwirtschaftliche Halmgüter mit einer beweglichen Ballenauslassvorrichtung (9), wobei die Bewegungsgeschwindigkeit der Öffnungs- und Schließbewegung der Ballenauslassvorrichtung (9) in Abhängigkeit von deren Position (10, 13) gesteuert wird, **dadurch gekennzeichnet, dass** die Bewegungsgeschwindigkeit sensor- und/oder programmgesteuert wird, wobei die Öffnungs- und Schließbewegung der Ballenauslassvorrichtung (9) wenigstens vor dem Erreichen einer Endstellung (10, 13) langsamer erfolgt als im übrigen Bewegungsbereich.

2. Rundballenpresse nach Anspruch 1, **gekennzeichnet durch** wenigstens eine Sensorik (19, 20, 21, 26, 27, 39) zur direkten oder indirekten Erfassung der Position (10, 13) der Ballenauslassvorrichtung (9) und eine Steuereinrichtung (19, 20, 33, 37), welche in Abhängigkeit der Positionssignale oder vorprogrammierter Werte eine Betätigungsvorrichtung (14, 23, 18, 30, 38) zum Bewegen der Ballenauslassvorrichtung (9) steuert.

3. Rundballenpresse nach Anspruch 2, **dadurch gekennzeichnet, dass** die Sensorik als elektrischer (26, 27, 39), optischer oder als Ultraschallsensor ausgebildet ist.

4. Rundballenpresse nach einem oder mehreren der vorhergehenden Ansprüche, **dadurch gekennzeichnet, dass** die Steuerung der Bewegungsgeschwindigkeit durch einen oder mehrere mechanische Sensoren (19, 20, 21) erfolgt.

5. Rundballenpresse nach einem oder mehreren der vorhergehenden Ansprüche, **dadurch gekennzeichnet, dass** die Steuerung der Bewegungsgeschwindigkeit direkt oder indirekt durch einen Endschalter, Steuernocken, ein Steuersegment (19, 20) oder eine Schablone erfolgt.

6. Rundballenpresse nach einem oder mehreren der vorhergehenden Ansprüche, **dadurch gekennzeichnet, dass** die Bewegungsgeschwindigkeit in Abhängigkeit vom Schwenkwinkel der Ballenauslassvorrichtung (9) gesteuert wird.

7. Rundballenpresse nach einem oder mehreren der vorhergehenden Ansprüche, **dadurch gekennzeichnet, dass** die Bewegungsgeschwindigkeit in Abhängigkeit vom Schwenkweg der Ballenauslassvorrichtung (9) gesteuert wird.

8. Rundballenpresse nach einem oder mehreren der vorhergehenden Ansprüche 2 bis 8, **dadurch gekennzeichnet, dass** die Betätigungsvorrichtung wenigstens einen Druckmittelzylinder (14, 23) und ein Steuerventil (18, 30, 38) aufweist.

9. Rundballenpresse nach einem oder mehreren der vorhergehenden Ansprüche, **dadurch gekennzeichnet, dass** die Kolbenposition des Druckmittelzylinders (23) als Parameter für die Steuerung der Ballenauslassvorrichtung (9) dient.

10. Rundballenpresse nach einem oder mehreren der vorhergehenden Ansprüche, **dadurch gekennzeichnet, dass** die Schwenkbereiche, in denen die Ballenauslassvorrichtung (9) mit reduzierter Geschwindigkeit bewegt werden soll, voreinstellbar sind.

11. Rundballenpresse nach einem oder mehreren der vorhergehenden Ansprüche, **dadurch gekennzeichnet, dass** wenigstens die reduzierte Bewegungsgeschwindigkeit der Ballenauslassvorrichtung (9) voreinstellbar ist.

12. Rundballenpresse nach einem oder mehreren der vorhergehenden Ansprüche, **dadurch gekennzeichnet, dass** die Ballenauslassvorrichtung (9) in Abhängigkeit von wenigstens einem weiteren Parameter ansteuerbar ist.

13. Rundballenpresse nach Anspruch 12, **dadurch gekennzeichnet, dass** die Ballenauslassvorrichtung (9) direkt oder indirekt durch eine Trenneinrichtung (42) für das Umhüllmaterial bei Beendigung des Umhüllungsvorganges des fertigen Ballens betätigbar ist, um ein automatisches Öffnen der Ballenauslassvorrichtung (9) zu bewirken.

14. Rundballenpresse nach einem oder mehreren der vorhergehenden Ansprüche, **dadurch gekennzeichnet, dass** die Sensoreinrichtung (26, 27, 39), der Endschalter oder ein Steuersegment (19, 20) dazu dient, eine oder mehrere andere Funktion/en der Rundballenpresse zu steuern, insbesondere das automatische Schließen der Ballenauslassvorrichtung (9) mit oder ohne Zeitverzögerung.

15. Rundballenpresse nach einem oder mehreren der vorhergehenden Ansprüche, **dadurch gekennzeichnet, dass** die Ballenauslassvorrichtung (9) direkt oder indirekt von einer Ballenabrolleinrichtung (44) oder einem nachgeschalteten Ballenwickler oder Ballensammler betätigbar ist.

## Claims

1. Round baler for stalk-type agricultural products having a movable bale outlet device (9), wherein the speed of movement of the opening and closing movements of the bale outlet device (9) is controlled depending on its position (10, 13), **characterized in that** the speed of movement is sensor-controlled and/or programme-controlled, wherein the opening and closing movements of the bale outlet device (9) is performed more slowly, at least before an end position (10, 13) is reached, than in the rest of the movement range.

2. Round baler according to Claim 1, **characterized by** at least one sensor system (19, 20, 21, 26, 27, 39) for directly or indirectly sensing the position (10, 13) of the bale outlet device (9), and a control device (19, 20, 33, 37) which controls, depending on the position signals or on pre-programmed values, an activating device (14, 23, 18, 30, 38) for moving the bale outlet device (9).

3. Round baler according to Claim 2, **characterized in that** the sensor system is embodied as an electric sensor, optical sensor or as an ultrasonic sensor (26, 27, 39).

4. Round baler according to one or more of the preceding claims, **characterized in that** the speed of movement is controlled by one or more mechanical sensors (19, 20, 21).

5. Round baler according to one or more of the preceding claims, **characterized in that** the speed of movement is controlled directly or indirectly by means of an end switch, control cam, a control segment (19, 20) or a guide plate.

6. Round baler according to one or more of the preceding claims, **characterized in that** the speed of movement is controlled depending on the pivoting angle of the bale outlet device (9).

7. Round baler according to one or more of the preceding claims, **characterized in that** the speed of movement is controlled depending on the pivoting path of the bale outlet device (9).

8. Round baler according to one or more of the preceding Claims 2 to 8, **characterized in that** the activating device (14, 23, 18, 30, 38) has at least one pressure medium cylinder (14, 23) and a control valve (18, 30, 38).

9. Round baler according to one or more of the preceding claims, **characterized in that** the piston position of the pressure medium cylinder (23) serves as a parameter for the control of the bale outlet device (9).

10. Round baler according to one or more of the preceding claims, **characterized in that** the pivoting regions in which the bale outlet device (9) is to be moved at a reduced speed are predeterminable.

11. Round baler according to one or more of the preceding claims, **characterized in that** at least the reduced speed of movement of the bale outlet device (9) is predeterminable.

12. Round baler according to one or more of the preceding claims, **characterized in that** the bale outlet device (9) can be actuated depending on at least one further parameter.

13. Round baler according to Claim 12, **characterized in that** the bale outlet device (9) can be activated directly or indirectly by means of a severing device (42) for the enveloping material when the enveloping process of the finished bale is finished, in order to cause the bale outlet device (9) to open automatically.

14. Round baler according to one or more of the preceding claims, **characterized in that** the sensor device (26, 27, 39), the end switch or a control segment (19, 20) serves to control one or more other function or functions of the round baler, in particular the automatic closing of the bale outlet device (9) with or without a delay.

15. Round baler according to one or more of the preceding claims, **characterized in that** the bale outlet device (9) can be activated directly or indirectly by a bale unrolling device (44) or by a bale wrapper or bale collector which is positioned downstream.

## Revendications

1. Presse à balles rondes pour des produits agricoles avec un dispositif mobile de sortie de balles (9), dans laquelle la vitesse du mouvement d'ouverture et de fermeture du dispositif de sortie de balles (9) est commandée dépendant de sa position (10, 13), **caractérisée en ce que** la vitesse du mouvement est commandée par capteur et/ou par programme, dans laquelle le mouvement d'ouverture et de fermeture du dispositif de sortie de balles (9) au moins avant d'atteindre sa position extrême (10, 13) se produit plus lentement que dans le reste de la plage de mouvement.

2. Presse à balles rondes selon la revendication 1, **caractérisée par** au moins une disposition des capteurs (19, 20, 21, 26, 27, 39) pour la détection directe ou indirecte de la position (10, 13) du dispositif de sortie de balles (9) et un dispositif de commande (19, 20, 33, 37), qui commande, dépendant des signaux de position ou de valeurs préprogrammées, un dispositif d'actionnement (14, 23, 18, 30, 38) pour bouger le dispositif de sortie de balles (9).

3. Presse à balles rondes selon la revendication 2, **caractérisée en ce que** la disposition des capteurs est constituée par des capteurs électriques (26, 27, 39), optiques ou à ultrasons.

4. Presse à balles rondes selon une ou plusieurs des revendications précédentes, **caractérisée en ce que** la commande de la vitesse de mouvement est effectuée par un ou plusieurs capteurs mécaniques (19, 20, 21).

5. Presse à balles rondes selon une ou plusieurs des revendications précédentes, **caractérisée en ce que** la commande de la vitesse de mouvement est effectuée directement ou indirectement au moyen d'un interrupteur de fin de course, des cames de commande, un segment de commande (19, 20) ou un gabarit.

6. Presse à balles rondes selon une ou plusieurs des revendications précédentes, **caractérisée en ce que** la vitesse de mouvement est commandée dépendant de l'angle de pivotement du dispositif de sortie de balles (9).

7. Presse à balles rondes selon une ou plusieurs des revendications précédentes, **caractérisée en ce que** la vitesse de mouvement est commandée dépendant de la distance de pivotement du dispositif de sortie de balles (9).

8. Presse à balles rondes selon une ou plusieurs des revendications précédentes 2 à 8, **caractérisée en ce que** le dispositif d'actionnement présente au moins un cylindre à fluide sous pression (14, 23) et une soupape de commande (18, 30, 38).

9. Presse à balles rondes selon une ou plusieurs des revendications précédentes, **caractérisée en ce que** la position du piston du cylindre à fluide sous pression (23) sert de paramètre pour la commande du dispositif de sortie de balles (9).

10. Presse à balles rondes selon une ou plusieurs des revendications précédentes, **caractérisée en ce que** les plages de pivotement, dans lesquelles le dispositif de sortie de balles (9) doit être déplacé avec une vitesse réduite, peuvent être préréglées.

11. Presse à balles rondes selon une ou plusieurs des revendications précédentes, **caractérisée en ce qu'**au moins la vitesse de mouvement réduite du dispositif de sortie de balles (9) peut être préréglée.

12. Presse à balles rondes selon une ou plusieurs des revendications précédentes, **caractérisée en ce que** le dispositif de sortie de balles (9) peut être commandé dépendant d'au moins un autre paramètre.

13. Presse à balles rondes selon la revendication 12, **caractérisée en ce que** le dispositif de sortie de balles (9) peut être actionné directement ou indirectement par un dispositif de coupure (42) pour le matériau d'enveloppe à la fin d'une opération d'enveloppement de la balle terminée, afin de provoquer une ouverture automatique du dispositif de sortie de balles (9).

14. Presse à balles rondes selon une ou plusieurs des revendications précédentes, **caractérisée en ce que** le dispositif de capteurs (26, 27, 39), l'interrupteur de fin de course ou un segment de commande (19, 20) sert à commander une ou plusieurs autre(s) fonction(s) de la presse à balles rondes, en particulier la fermeture automatique du dispositif de sortie de balles (9) avec ou sans temporisation.

15. Presse à balles rondes selon une ou plusieurs des revendications précédentes, **caractérisée en ce que** le dispositif de sortie de balles (9) peut être actionné directement ou indirectement par un dispositif de roulage de balles (44) ou un enrouleur de balles ou un collecteur de balles installé en aval.
